(19) **Europäisches Patentamt / European Patent Office / Office européen des brevets**

(11) **EP 3 300 002 A1**

(12) # EUROPEAN PATENT APPLICATION

(43) Date of publication:
**28.03.2018 Bulletin 2018/13**

(51) Int Cl.:
**G06K 9/46** (2006.01)       **G06K 9/62** (2006.01)

(21) Application number: **16190198.8**

(22) Date of filing: **22.09.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Styria medijski servisi d.o.o.**
**10010 Zagreb (HR)**

(72) Inventors:
• **DEUMIC, Enes**
  **10010 Zagreb (HR)**

• **FERNEZIR, Mladen**
  **10010 Zagreb (HR)**
• **VELIC, Marko**
  **10010 Zagreb (HR)**
• **ANICIC, Davor**
  **10010 Zagreb (HR)**
• **BORKO, Ivan**
  **10010 Zagreb (HR)**

(74) Representative: **Sonn & Partner Patentanwälte**
**Riemergasse 14**
**1010 Wien (AT)**

(54) **METHOD FOR DETERMINING THE SIMILARITY OF DIGITAL IMAGES**

(57) Method for determining the similarity of at least two searched images relative to at least one search image, the method comprising: propagating the at least one search image through a neural network trained for image classification and having at least two consecutive layers; extracting activations of the neural network resulting from the propagation; determining a vector representation of the at least one search image based on the extracted activations; determining a value of a distance measure between the vector representation of the at least one search image and each of at least two pre-determined vector representations corresponding to the at least two searched images; and determining a relative similarity of the searched images according to the respective determined value of the distance measure, wherein when extracting activations of the neural network resulting from the propagation, activations of at least two layers at different depths of the neural network are extracted, and image search engine based on said method.

Fig. 3

EP 3 300 002 A1

**Description**

BACKGROUND OF THE INVENTION

Field of the Invention

The invention is generally related to digital image processing, in particular finding images similarity and using images as search inputs thus finding relations between images.

Description of Prior Art

Using images as search inputs for finding similar images is required in variety of fields. For example, searching classified ads is a process commonly performed by user through keyword search, categories' search through hierarchy tree or search by features of products or services. Such searches are generally time consuming for users and for some categories they don't produce satisfactory results. To enhance user experience by making search faster and more efficient, visual search based on image similarity is a good solution.

Visual search or search by image is a well-known feature on websites like Google Image Search, JustVisual (ex. Superfish) http://justvisual.com/ or Camfind http://camfindapp.com/. Visual search can also enable easier and more appealing search on the classified ads.

Huei-Fang Yang et al ("Supervised Learning of Semantics-Preserving Hashing via Deep Neural Networks for Large-Scale Image Search", http://arxiv.org/abs/1507.00101) have proposed an approach of using a binary hashing vector resulting from a single top layer of a neural network trained for image classification. Specifically a binary encoding function is applied to the feature vector of the top layer and the Hamming distance of resulting binary hashing vectors of images propagated through the network serves for comparison of those images. However the use of the feature vector of only the final layer of the network results is a semantic-preserving comparison and disregards visual features of the compared images.

Neal Khosla et al ("Building ImageBased Shoe Search Using Convolutional Neural Networks", http://cs231n.stanford.edu/reports/nealk final report.pdf) describe a similar approach based on the unmodified feature vectors extracted from a single top layer and using Euclidean distance for comparison.

Also Jiang Wang et al ("Learning Fine-grained Image Similarity with Deep Ranking", https://arxiv.org/pdf/1404.4661v1.pdf) rely only on the final layer of a multiplexed ranking model, which is implemented as a convolutional neural network and trained with triplets of images expressing positive and negative similarity. They also use Euclidean distance for comparison.

A completely different approach for comparing images is described in CN 104 572 965 A. The images are reduced in size and colour space to 64 shades of grey colour. After reduction, thresholding is performed on the images and the results are compared by computing their Hamming distance. This approach compares only visual features and disregards semantic features of the compared images.

One approach for image comparison that goes beyond raw visual comparison is described in US 2015/0278642 A1. Relatively high-ranked feature maps of a convolutional neural network are used to identify interest points ("salient features") by backprojection to the bottom layer. Then geometric relations between the identified interest points can be used for image comparison, although it is not described in detail how this comparison works.

Moreover current systems and methods used for visual search generally suffer from a number of drawbacks in the sense that for different categories on classified ads' portals there are different expectations from users with respect to different categories. For example, current systems implementing semantic image search pre-define certain groups of images as one class and then decide on whether the new image belongs to that class or not. However some categories should incorporate more visual features into search criteria, like colours and patterns, while some other categories could yield satisfactory results with comparison on semantic level.

SUMMARY OF THE INVENTION

It is an object of the present invention to provide a method for determining the similarity of at least two searched images relative to at least one search image, wherein both visual and semantic features of the compared images are taken into account.

In order to achieve the objective mentioned above, the present invention provides a method for determining the similarity of at least two searched images relative to at least one search image, the method comprising: propagating the at least one search image through a neural network trained for image classification and having at least two consecutive layers; extracting activations of the neural network resulting from the propagation; determining a vector representation of the at least one search image based on the extracted activations; determining a value of a distance measure between the vector representation of the at least one search image and each of at least two pre-determined vector representations corresponding to the at least two searched images; and determining a relative similarity of the searched images according to the respective determined value of the distance measure, wherein, when extracting activations of the neural network resulting from the propagation, activations of at least two layers at different depths of the neural network are extracted.

Distance measure relates to mathematical distance between two or more vectors and can be calculated using standard distance metrics e.g. cosine distance, Eucledian distance, etc. Within the context of this invention, more similar images will have smaller distance measure while images which are less similar will have larger distance measure.

Moreover the objective mentioned above is achieved by a computer program product for determining the similarity of at least two searched images relative to at least one search image, the computer program product comprising program parts, which when loaded onto a computer are designed to perform the method steps of a method according to the present invention.

Finally the present invention provides a search engine for searching images according to the objective mentioned above, wherein the search engine comprises: a neural network (i.e. represented by its structure, configuration and parameters), trained for image classification and having at least two consecutive layers; a collection (e.g. an index or database) of at least two pre-determined vector representations corresponding to at least two searchable images; and selection means for selecting one or more of the at least two searchable images based on at least one search image provided to the search engine and based on the similarity of the at least two searchable images relative to the search image, wherein the selection means comprises means for propagating the at least one search image through the neural network, means for extracting activations of the neural network resulting from the propagation, means for determining a vector representation of the at least one search image based on the extracted activations, means for determining a value of a distance measure between the vector representation of the at least one search image and each of the at least two pre-determined vector representations from the collection, and means for determining a relative similarity of the searchable images according to the respective determined value of the distance measure, and wherein the means for extracting activations of the neural network are configured to extract activations of at least two layers at different depths of the neural network. The search engine may comprise a software system that is designed to search for information in a database or directory, preferably in a product database. The search engine may comprise computer systems and/or virtual machines. It can be distributed across multiple systems connected in a network. The systems may be operated at different geographic locations. The search engine may comprise a textual or graphical user interface for entering one or more, preferable two or more search images; in a preferred embodiment the search images may be assignable to two or more groups of images by means of the user interface.

By using the present invention, retrieved searched images may be presented ordered by calculated similarity. Images will be considered more similar if their mutual distance measure is lower.

In the above, the term "layer" refers to a structure of the neural network comprising one or more "neurons" (i.e. computational units), wherein a layer is a collection of neurons connected or connectible to (neurons of) the same prior and/or subsequent layer. There are no connections between the neurons within the same layer. The term "activations" refers to the calculated outputs of the neurons (e.g. of a layer) after propagating the inputs from the respective prior (below) layer through them; hence "extracting activations" basically means copying or referring to these activations. The "distance measure" refers to a vector comparison problem, since images are represented by vectors in the present method, wherein similar images are close as per some distance metric. To apply such a metric, the images are first transformed into vector representations using the neural network, which acts as a transformer. Then the distance measure can be chosen to be suitable for the purpose, e.g. cosine distance performs well in high-dimensional spaces.

In the neural network each layer's activations are high dimensional vectors. Images that activate similar neurons will have similar vectors. This can be used to determine which images are similar. In addition, using activation vectors from different layers in neural network enables the comparison of images based on different visual and/or semantic features. The vectors from lower layers of the network, i.e. the ones closer to the input, emphasize visual features, while the vectors from upper layers of the network, i.e. the ones further from the input and closer to the classification and output layers, emphasize semantical features.

Preferably a sub-vector representation is determined based on the extracted activations of each of the at least two layers and the vector representation of the at least one search image is determined by concatenating the sub-vector representations. In this instance the comparison vectors are concatenated from vectors (sub-vectors) taken from different levels (depth) of the network which is a basis for the visual-semantic trade-off. Calculating similarities between images is based on comparison of their merged vectors taking into account the comparison criteria.

At least one of the sub-vector representations may be determined by performing a dimensionality reduction of the extracted activations of the respective layer. The neural networks applied in the present field usually have several thousands or even millions of neurons in different layers making any vector comparisons computationally and memory costly. By applying dimensionality reduction, more efficient and faster computation of the necessary method steps can be achieved.

Specifically, dimensionality reduction can be performed by one or more operations from a group comprising:

max pooling, average pooling and singular value decomposition (SVD). For instance "global pooling" may be performed by first performing max pooling after each convolutional layer (for example with 2x2 patch), reducing the dimension by 75% from NxNxD to KxKxD and then performing average pooling with patch size KxK, reducing the dimensionality to 1x1xD. Although this seems as a big loss in information it turns out that comparison results are very good. Reducing the dimension less extreme is also a valid option and the present method applies of course also to less extreme versions.

Additionally or alternatively the dimensionality reduction may include the application of an autoencoder neural network. Autoencoders are more flexible than e.g. SVD, which minimizes the reconstruction error and there is no control over the kind of features that need to be extracted. Autoencoders allow feature extraction using different activation functions, force sparsity by adding the spars cost to a loss function, and adding custom metrics during optimization procedure. Another advantage is that the reduced dimensional vectors can be obtained directly on GPU where neural network was trained. This makes it significantly faster than the SVD option.

In an advantageous variation of the present method, the relative influence of the activations of each of the at least two layers on the vector representation of the at least one search image is modified according to weights associated with the at least two layers. In this variant the present method enables the user to decide on search criteria and formulate a trade-off between visual and semantic search. This is done by assigning different weights to vector components from different depths within neural network. Such flexibility gives much better search results based on a so called visual-semantic trade-off criterion.

Components extracted from lower layers of the network relate more to the visual features of images since convolutions in lower layers relate to edges and colour patterns. Components form the upper layers of network relate more to semantic information i.e. they represent higher-level concepts and not only visual features and patterns. For example, the activations from the first convolutional layer would find all the green things similar, while the activations from last fully connected layer would find all the cars or birds or members of any other class similar.

Depending on the context and users' preferences different recommendations for given image provide an optimum result. For example, the user might be shopping for a black dress and is open to different models, as long as they are black. On the other hand another user might want a specific shape of a dress and does not care much about the colour. Any combination of above preferences is possible. If all components of the vector representation are given the same weight, this will result in a very good similarity search in general, although it cannot satisfy different users' preferences. To solve this problem, different weights for vector components from different layers are proposed.

Thus when used in connection with an adaptable deep convolutional neural network, the present method can overcome the disadvantages of the prior art by providing a method and a system for having visual search adaptable to user preferences taking into consideration the fact that the objects recognized in images from different parts of classification tree of classified ads have different optimum of visual-semantic trade-off.

For example when merging the vector representation from sub-vectors originating from different layers, before concatenating the sub-vectors they can be multiplied by a constant between 0 and 1 based on a context and users' preferences regarding what constitutes a similar image (colour, shape, texture etc.). The weights can be normalized with the constraint that they sum up to 1. This constraint is artificial, in order to give an interpretation of what is the percentage of influence of each sub-vector. A practical consequence of this constraint is uniqueness of weights choice. After each vector is multiplied by a constant, vectors are concatenated and optionally normalized. The resulting vectors can be used as described above. The resulting image similarity search will return images based on a given context and preferences.

One embodiment of the presented invention is to make the user's interface in such a way that the user is offered a default similar image search and as well a slider with the scale which would change the weights, changing the output of similar images in real-time to better suit the user's preferences. One end of the slider would represent more visual similarity and the other end would represent more semantic similarity.

Another embodiment of the presented invention is to make the user's interface for manual input or selection of images and defining them as being the members of the same group. In this way system will automatically optimize weights to emphasize those subvector elements which separate different groups and find similarities in the same groups in the best way as described above. Advantageously, the weights can be determined from at least one group of search images, wherein each group comprises at least two search images, according to distances between the vector representations of the search images belonging to the same group. In this case, inputs of similar images according to user's preference may be acquired from the user and an optimal visual-semantic trade-off for image similarity calculation is determined based on user's inputs.

In this context, the weights are preferably determined as to decrease the summation of distance measures between vector representations of the search images belonging to same group. Again it is assumed that the value of the distance measure is lower the more similar the images are and higher the more different the images are (visually or semantically). By decreasing summation of distance measures of images within the group, user's preferences for definition and separation of groups can be extracted from the provided groups of images. In this way users can choose several images by arbitrary criteria and define them as a group. After applying the same principle for at least two groups, the system can learn on its own what the visual or semantic features for grouping of these images are, produce arbitrary number of new groups corresponding to these criteria and subsequently search and assign images according to those groups. Such a procedure may be written similar to the denominator of the overall score function mathematically defined in the detailed description of the invention.

It has turned out particularly useful when the weights are determined from two or more groups of search images, wherein each group comprises at least one search image, according to distance between the vector representations of search images belonging to different groups. In this instance a semi-automatic definition of criteria for new categories (defined by the groups of images) is achieved. In this instance the obtained weights tend to emphasize those visual and/or semantic features where the search images belonging to different groups differ over features which the search images belonging to different groups have in common.

Preferably the weights are determined as to increase the summation of distance measures between vector representations of the search images belonging to different groups. Again it is assumed that the value of the distance measure is lower the more similar the images are and higher the more different the images are (visually or semantically). By increasing summation of distance measures of images belonging to different groups, a combination of weights yielding the highest overall distance between the search images provided between each group is obtained. Thus the weights tend to emphasize those visual and/or semantic features where the at least two search images differ over features that the at least two search images which are considered members of the respective group have in common. Such a procedure may be written similar to the numerator of the overall score function mathematically defined in the detailed description of the invention.

In a further preferred embodiment, the weights are determined by maximizing an overall score function, which is a ratio wherein the numerator of the ratio is the summation of distance measures between vector representations of the search images belonging to different groups as defined above and the denominator of the ratio is the summation of distance measures between vector representations of the search images belonging to same group as defined above. In this way the above procedures can be combined in an overall score function when two or more groups with two or more search images each are provided for determining the optimal weights. In this case the sum of similarities within each group can be optimized inversely proportional to the sum of similarities between different groups, thus yielding weights achieving an optimal clustering (i.e. optimal grouping and optimal separation between groups). Such an overall score function may be written similar to the overall score function mathematically defined in the detailed description of the invention, i.e. as the ratio of the numerator and the denominator respectively formed according to procedures defined above.

It has turned out advantageous if cosine distance is used as the distance measure. Cosine distance can be computed efficiently and works well in high dimensions, i.e. for large vector representations. In general, other distance measures may also be applied with the present method, e.g. Hamilton distance, Euclidean distance, etc.

A particularly useful application of the present method is providing a selection of searched products similar to at least one search product, comprising the method as described above, wherein the search image(s) is/are image(s) of the at least one search product and the searched images are images of the searched products. This method for product search can be advantageously applied to an online marketplace. The buyer's side and the seller's side of the online buying process can both benefit from the present method. Basically, the present method may provide an adaptable visual search method which covers the buyer's side, but it is built upon the trained neural network classification model which may also be used for ads categorization on the seller's side of the process. One of the advantages when applying the present method in this context is an improvement of the user's experience and simplification of online buying and selling process in classified ads systems. Online selling process is implemented with the use of computer vision i.e. object recognition technology in a way that a seller is able to take a photo of the product intended for sales and the system automatically determines in which category the ad should be placed. Online buying process is supported with the use of visual search feature. Visual search relates to a feature that a computer system is able to automatically search for items based on visual similarity. Visual search allows user to set parameters of visual-semantic trade-off and thus search for ads which are more visually similar or more semantically similar to the image in search query. This ensures capability to have visual search adaptable to user preferences considering the fact that objects recognized in images from different parts of classification tree of classified ads system have different optimum of visual-semantic trade-off.

BRIEF DESCRIPTION OF THE DRAWINGS

Referring now to the drawings, wherein the figures are for purposes of illustrating the present invention and not for purposes of limiting the same,

Fig. 1 schematically shows a process for creation of a database on which the search engine can be based;
Fig. 2 schematically shows a process of semi-manual clustering based on human inputs and optimization calculation according to a preferred embodiment of the invention;

Fig. 3 schematically a data flow diagram for obtaining a vector representation of an image according to the invention.

DETAILED DESCRIPTION OF THE INVENTION

The present method employs a neural network for transforming images into vector representations as mentioned above. Deep convolutional neural networks are state-of-the-art method for object recognition, object detection and image segmentation. For classification tasks, these machine learning models are trained by feeding them with vast amounts of data, i.e. annotated images. Annotated images are images with accompanying information about the class or classes that image represents i.e. object or objects or concepts shown on the image.

Given a set of images and N categories to which images are assigned (labels), convolutional neural networks are used to learn from such set-up to categorize never seen images to one of N categories. Unlike fully connected neural networks, convolutional networks share weights and use pooling operation to reduce the number of parameters used. Some general terminology from the field of convolutional neural networks is described as follows:

Convolutional layer

Convolutional layer is the main layer in all convolutional networks. Given an input of several rectangular feature maps, a convolutional layer returns a certain predefined number of output feature maps. To achieve this transformation, each convolutional layer uses as many small filters as there are wanted output feature maps. Each filter slides over given input maps and for each sliding position one activation output is returned for one of the resulting feature maps. The main difference between fully connected layers is that one output activation corresponds to only a small spatial part of the starting input, hence requiring much less parameters and enabling more efficient computation. Output of convolutional layers can be viewed as neurons arranged in 3D volume. For example, one of the most popular convolutional network architectures Alexnet, takes images of size 227x227x3 (width x height x number of channels) using kernel of size F = 11, stride S = 4 and padding P = 0 outputs a 3D volume of neurons of size 55x55x96 (290.400 neurons).

Each convolutional layer can be viewed as a feature extractor. For example, the features extracted from first convolutional layer are the lines of different orientation i.e. edges and blobs of colour. Going deeper, the features become more complex, corresponding to more complex shapes. A fully connected layer (or series of fully connected layers) is then usually used (although fully convolutional architectures are becoming more popular) to weight these features and use them to make a classification.

Pooling layer

Pooling layers are used to spatially downsample given input feature maps. Similarly to convolutional layers, pooling layers typically use small filters sliding over given input feature maps. The difference is that pooling layers do not use any learned parameters but simply calculate mean or maximum of the entire filter area. Pooling operation reduces the dimensionality by taking maximum or average value of MxM patch and sliding it over the input of size NxN where M <= N. For example, input volume of 64x64x128 and sliding patch of size 2x2 reduces the dimensionality to 32x32x128.

Dropout layer

Dropout layers are used as a form of neural network regularization i.e. a method to reduce overfitting phenomenon - a situation where network adapts too much to training data i.e. learns features which are not so important and thus reducing generalization on new data. Given some input feature map, dropout layers randomly cancel a certain predefined number of inputs. Dropout layers are only active while training the network and helping to prevent neuron co-adaptation which could lead to overfitting to the training data.

Softmax layer

Softmax layer converts given inputs so that resulting output activations could be interpreted as probabilities. In mathematical terms, this means that all activations after softmax sum to one and are all greater or equal to zero. Softmax is used at the network's end and its outputs are interpreted as probabilities for the given input example to belong to each of the possible classes.

Batch normalization layer

Batch normalization layers are used to normalize inputs anywhere in the network by using mean value and standard deviation for the given input batch. Using batch normalization layers alleviates network initialization issues and enables faster training. In addition, batch normalization helps in regularizing the network and hence results in better overall accuracy.

PReLU activation

Parametric rectified linear unit (PReLU) is one of the often used neural network activations which typically follows immediately after convolutional or pooling layers. PReLU is similar to rectified linear units (ReLU) and leaky rectified units (LReLU). While ReLU simply gives output equal to its input if the input is positive and zero otherwise, LReLU activations multiply negative inputs with some predefined constant. For PReLU, the actual multiplicative number for negative numbers is not predefined in advance but learned while training the network.

Fire module

Fire module is a composition of three convolutional layers: one convolutional layer followed by two parallel convolutional layers with different filter sizes (1x1 and 3x3 filters). The use of Fire module enables comparatively high accuracies with low parameter count and memory usage (Forrest N. Iandola, Song Han, Matthew W. Moskewicz, Khalid Ashraf, William J. Dally, Kurt Keutzer:SqueezeNet: AlexNet level accuracy with 50x fewer parameters and <0.5MB model size).

In the following two exemplary network architectures are described:

Detailed description of CNN architecture - example 1:

The layers of the network are organized as follows. The first block of the network consists of convolutional layer followed by batch normalization layer. The block is then followed by a max pooling layer. The second block of the network consists of eight convolutional layers each followed by a batch normalization layer which is followed by PReLU activation and dropout layer and block is followed by a max pooling layer. The third block of the network consists of four convolutional layers, each followed by a batch normalization layer with PReLU activations and dropout. Block is followed by max pooling layer. The fourth block consists of two convolutional layers each followed by a batch normalization layer. The block is followed by a max pooling layer. The fifth block consists of two convolutional layers each followed by a batch normalization layer. The block is followed by a max pooling layer. Part of this CNN is the above described specific combination of layers which yields the best categorization results on this type of problem for classified ad categorization as confirmed by the experiments.

Detailed description of CNN architecture - example 2:

The second example as a part of its architecture implements the above mentioned Fire modules with additional upgrades as described in this section. In addition to the Fire modules, a residual bypass is used so that the outputs of the two previous Fire modules are added and proceeded as inputs into the third one which follows them. If these two input Fire modules have different numbers of output feature maps, the earlier one is changed by using 1x1 convolutions to match the second one and then added as input for the next Fire module. This technique enables faster training and higher accuracy. Batch normalization is used before each PReLU activation which also reduces the training time and helps with network regularization. In addition, the final classification layer is often in state-of-the-art literature implemented as a fully connected layer. In this architecture it is replaced with an equivalent fully convolutional one which allows using variable image sizes while training the network. The network consists of five stages separated by max pooling layers with stride two. The first stage consists of only one convolutional layer with stride two which immediately down-samples the starting image. The second stage consists of 8 consecutive fire modules, the third one of 4 fire modules and the fourth stage of 3 fire modules. The fifth stage consists of two convolutional layers followed by one max pooling layer and the final classification layer. While training the network, dropout is at first applied only to the last pooling layer and later progressively towards the network's beginning after each Fire module.

Dimensionality reduction techniques

The following procedure can be done on any pre-trained convolutional neural network. The technique described here uses a pre-trained neural network with three outputs as feature extractor in the following set of steps:

- After each last fully connected layer add a smaller sigmoid layer with 128 neurons,
- Hold the weights fixed except for added layers,
- Train and fine tune the neural network,

- After each convolutional layer put max pooling layer, unless it already exists,
- After each max pooling layer put average pooling layer and reduce dimensionality from KxKxD to 1x1xD.

Using different neural network architectures results in a different number of vectors. The subset of vectors obtained in this way is concatenated into one vector and that vector is used for obtaining similarity. By using the vectors from different parts of neural network it is ensured that they represent semantic as well as visual features. The most important layers are usually the first convolutional layer, the last convolutional layer and a new 128 dimensional layer on the top of the network. Using more than 3 vectors might require more tuning for obtaining the optimum results. The resulting vectors have different dimensions, from 128 to 756. If less extreme pooling was used, one can expect these numbers to be significantly larger, for example 32.768 (8x8x512).

This procedure may also include fixed size for each extracted vector and give vectors the same weight. The vector concatenation procedure is described below:

- Scale each of the vectors to 0 mean and 1 standard deviation,
- To all vectors having dimension larger than 128 apply dimensionality reduction technique such as SVD, such as autoencoder or any other dimensionality reduction method so that resulting dimension is 128,
- Normalize each vector so that all vectors have the unit length,
- Concatenate n vectors from coming from different layers so that the resulting vector dimension is 128 x n. Normalization ensured that each vector has equal contribution,
- Normalize the resulting vectors to unit length so that calculating cosine distance can be done faster using dot product computation technique,
- Optionally another dimensionality reduction is performed to reduce the dimensionality further in order for comparisons to run faster.

Everything leading to transformations is saved so it can be applied to new vectors, therefore when a singular value decomposition is made, keep all the matrices necessary to act on a new vector that needs to be transformed. If matrix M with dim = (m, n) represents images we want to compare and vector w with dim = (1, m) is a new vector representing one image, M dot w.T, given that all vectors are unit vectors, represents the similarity vector s with dim = (n, 1). The highest components of vector s represent the most similar images. Since in this particular implementation we use distances, score calculated above should be subtracted from 1.

Categorization and Search Cascade

In this section it is described in more detail how one can control the weight and thus how much each vector component (sub-vector) is used in determining the similarity. After one or more images are being uploaded into the system by the user, categorization and visual search components of the system can be combined. In this case, image or images are firstly categorized and then specifically tuned visual search is performed i.e. predefined weights ratio is similar to predefined slider position. For example, if an image of a smartphone is uploaded, then the image is firstly categorized into 'smartphones' category and after that, specific instance of visual search feature is used. This instance puts emphasis on the semantics of similarity and results then include various different smartphones including smartphones of different vendors, sizes, colours etc. This is conducted by putting more weights on the upper parts of similarity vector which come from the upper layers of the CNN. On the contrary, if an image of a woman dress with flower patterns is uploaded, then this image is categorized into an appropriate category e.g. fashion/woman/dresses and then visual search engine behaves more visually than semantically. The results of such a search will then include other woman dresses with flower or similar patterns.

Selecting optimal weights based on human input

Semi supervised clustering

Vectors obtained as described above can be clustered using many different clustering methods, for example k-means or hierarchical clustering. However, apart from selecting some hyper-parameters or distance metrics, the user has no control over how clustering is actually done. In one case user wants to separate clusters based on colour and in another one user wants separation based on type of t-shirt in dataset.

Instead of labelling large amount of images and training the neural network again, the present method can be used for clustering vectors obtained from the trained neural network by labelling only few images of each class and determining weight settings corresponding to the separation intended by the user.

Examples:

- The pre-trained neural network has a label "bikes". In this category people took pictures of bikes and zoomed in specific parts of bikes. User would like to separate these images into 7 different classes: whole bike, rear derailleur, pedals, front derailleur, saddle, hand grip and the rest not belonging to any of specified categories.
- The pre-trained neural network has a label "t-shirts"; User would like to cluster this category based on shirt colour.

Here is the series of steps for obtaining the results:

- Select category to be clustered (bikes or t shirts);
- Select from 2 to 10 images for each class except "other"; in the case of bikes select 2-10 images for 6 classes (as the 7th is "other");
- Extract features from pre-trained neural network and select the vectors representing selected images from the previous step;
- Concatenate vectors giving some weight to each vector;
- Use score function which depends on weights for vector contribution;
- Maximize the score function over weight parameters.

The score function (also referred to as "overall score function") can be defined as:

$$f(W = (w_1, w_2, \ldots, w_n)) = \frac{\sum_i^n \sum_j^n (\sum_\alpha \sum_\beta (1 - X_i(W) X_j^T(W))_{\alpha\beta}[i \neq j])}{\sum_i^n \sum_j^n (\sum_\alpha \sum_\beta (1 - X_i(W) X_j^T(W))_{\alpha\beta}[i = j])}$$

Where: $X_i$ is a matrix of vectors representing i-th image selection (for example 10 red shirts); W is a vector of weights where components are constants multiplying each vector from different parts of neural network; If unequal number of images from different groups is selected (for example 10 red shirts and 3 blue shirts) either truncate X or add all zero rows to matrix with less rows.

This score function has the following meaning: in numerator the sum of cosine distances between vectors not belonging to the same class is calculated and in denominator the sum of distances between vectors belonging to the same class is calculated. In other words, the score increases as distance between vectors from different classes increases and the distance between vectors belonging to same class decreases. It is assumed that vectors are normalized and cosine distance is calculated. Other distance measures are also possible and that would result in somewhat different formula.

Optimizing vector representation

Now that a score function is defined, given a constraint that sum of weights adds to 1 (to get a unique solution) the representation is optimized in a way that will maximize the score and as the result best separates new classes. Any constraint optimization algorithm works fine. This optimization results with optimal values for W, in terms of the influence of each layer to match various user's similarity preferences.

Creating new classes based on distance measures

By selecting small number of images for getting the optimal vector representation of such selection, we can use similarity search to put new images into clusters we formed by creating a centroid for each class (by summing up the vectors for each class). New image is then propagated through neural network, components are extracted through earlier described pipeline, each vector is weighted and cosine distance is calculated between vector representing a new image and each centroid. Where the similarity is largest the system automatically assigns that new image to the appropriate class.

A threshold for similarity can be pre-set to allow the image to belong into a particular cluster. If the similarity score is above the threshold for more than one class, the largest score is selected. If all scores are below the threshold, we put the image to "other" category. Threshold can be a scalar or a vector (if different thresholds are to be used for different classes). After each class is populated with enough examples a classifier is trained to apply thresholds automatically. Direct application of this is replacing manual human work for creating new categories and requiring a very small sample selection for each new class. The advantage of this approach is that the user can define criteria for creating new classes. The described invention thus provides method for simplifying user experience on classified ads portals and enables utilization of existing data in the most beneficial way.

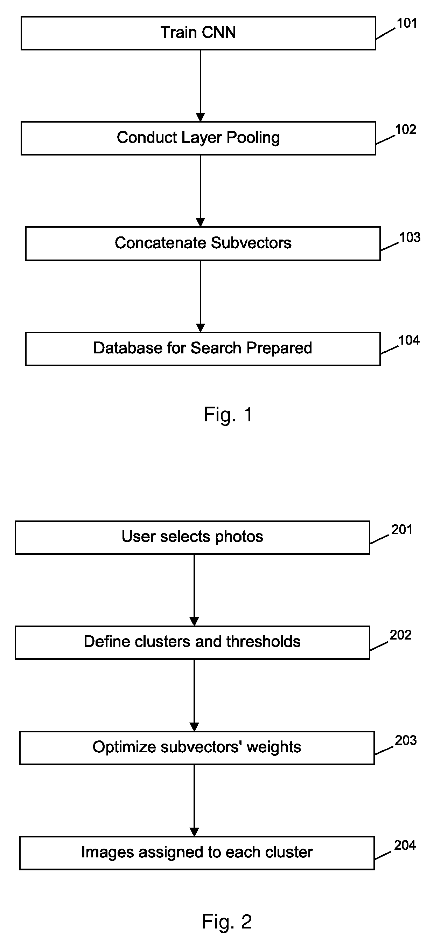

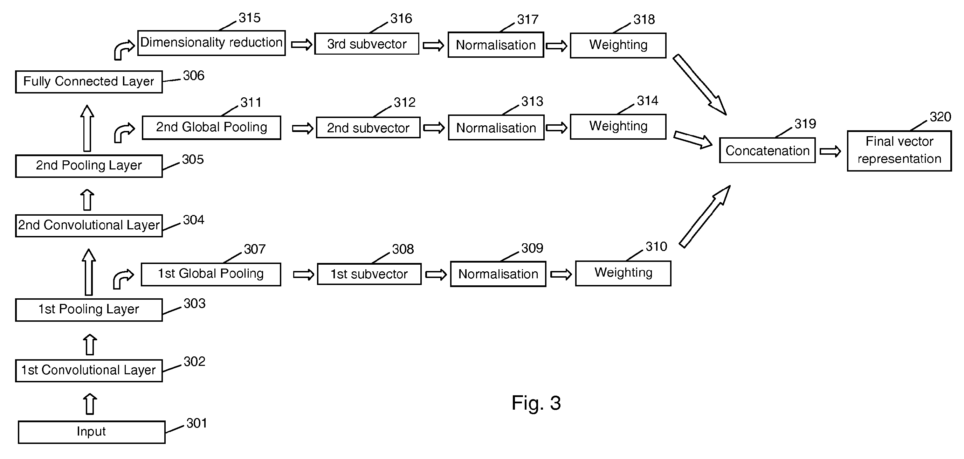

Fig. 1 shows a procedure of creating database i.e. storage of vector representations which are then used for search. First, convolutional neural network is trained 101 on the entire or part of the database of raw images. Then network layers are pooled and normalised 102 as described in more detail in connection with Fig. 3. Subvectors from different parts of the network are concatenated 103 and finally vector representations are stored on some form of memory storage or media 104 as database for conducting search. This database can reside on physical permanent data storage or can be completely or partially stored in the working memory of a computer or server.

Fig. 2 shows a high-level process for the use-case of semi-automatic clustering of search images like photos. First, a user selects photos 201 that he/she finds similar based on some criteria (visual or semantic). Then user defines these images as members of the particular group (cluster) and optionally some threshold measure 202 to be used as a cutoff (sensitivity) that will be used as a threshold value for calculated similarity and assigning of the new images to the newly defined group. Then optimization procedure is initiated 203 to find optimal values of weights for separation of groups based on user's input. Finally, procedure for assigning 204 other images from database to the newly created groups based on new weights and optionally threshold value for similarity is initiated.

Fig. 3 shows a data flow diagram for obtaining a vector representation of an image according to the invention. A digital images of any format like jpg, png, tiff etc can be used as an input 301 for a neural network 302-306. The input image is presented to the neural network 302-306 as a series of numbers representing pixel values (including colors). Input values are then propagated to the 1st convolutional layer 302 which can be of different sizes i.e. have filters of sizes 3x3 or 5x5 or any other filter size. These filters can be numerous, e.g. 32 filters, 64 filters, 128 filters etc. The signal of the 1st convolutional layer 302 is propagated to the 1st pooling layer 303. Pooling can have filters of size 2x2, 3x3, 5x5 or any other pooling size. Pooling can be conducted as a max pooling, average pooling or other operation. Above the 1st pooling layer 303 a 2nd convolution layer 304 follows, similar to the 1st convolutional layer 302, and it is then again followed by a 2nd pooling layer 305. At the top of the network a fully connected layer 306 with sigmoidal neurons is provided. Instead of sigmoid operation any other activation function can be used like ReLU, TanH and similar.

Based on this exemplary (simplified) network structure, the extraction of a vector representation of an input image is performed as follows: The image is propagated throughout the neural network 302-306. After each pair of convolution and pooling layers 302, 303; 304, 305 there is a global pooling operation 307; 311 which is applied to the activations of the neural network 302-306 at the respective layer resulting from the propagation and yields a respective 1st and 2nd subvector 308, 312. For the last fully connected layer 306 a dimensionality reduction operation 315 like SVD is used to obtain a 3rd subvector 316. The subvectors 308, 312, 316 extracted from different depths of the neural network 302-306 are then normalised in terms of both dimensionality and values in a respective normalisation operation 309, 313, 317. After normalisation, a respective weighting operation 310, 314, 318 is applied to the normalised subvectors. The weighted vectors are concatenated together in a concatenation operation 319 to form the final vector representation 320 of the input image.

To illustrate the structure and functioning of the subvectors and weights, a simplified example is described in the following. For this example eleven (search) images are assumed with the following content:

Image no. 1 showing: short sleeve red shirt cotton,
Image no. 2 showing: short sleeve blue shirt jeans,
Image no. 3 showing: long sleeve blue shirt cotton,
Image no. 4 showing: long sleeve blue shirt jeans,
Image no. 5 showing: short sleeve blue shirt cotton,
Image no. 6 showing: long sleeve red shirt cotton,
Image no. 7 showing: red T-shirt cotton,
Image no. 8 showing: red T-shirt cotton,
Image no. 9 showing: blue T-shirt cotton,
Image no. 10 showing: red trousers cotton,
Image no. 11 showing: blue trousers jeans.

Furthermore it is assumed for the sake of simplicity that the neural network 302-306, the pooling layers 307, 311 and the dimensionality reduction operation 315 are configured such that each of the subvectors 308, 312, 316 has three entries ("dimensions") and is thus an element of three-dimensional real coordinate space. After training the neural network 302-306 with an appropriate training set comprising a collection of training images each associated with a selection of semantic classes (e.g. T-shirt, Shirt, Trousers), the entries of the subvectors 308, 312, 316 from different depths of the neural network are responsive to different (learned) features according to the following correlation:

1st subvector 308: color, edges, texture/material;
2nd subvector 312: shape vertical, shape horizontal, shape diagonal;
3rd subvector 316: T-shirt, Shirt, Trousers.

Thus in the present example, each image can be represented by three three-dimensional subvectors (i.e. vector representation having nine entries in total). First element of the first subvector is responsive to colour. This means that for example values lower than 0.5 can represent red colour shades and values higher than 0.5 represent blue shades of colour. Second element is responsive to edges and third to texture or material. These elements can be binary elements which means that instead of floating point values, one-hot encoding will be used. E.g. we can have two different elements for two different colours and these elements can be binary. If the image is red then first element will be one and second will be zero and vice versa for blue images. One-hot encoding can be used for any other feature. The same logic applies to features from 2nd and 3rd subvectors.

Based on the configuration of this example, the vector representation of some of the images mentioned above may look like this:

Image no. 1 showing: short sleeve red shirt cotton:

1st subvector: 0.2, 0.3, 0.2;
2nd subvector: 0.4, 0.5, 0.4;
3rd subvector: 0.6, 0.7, 0.2.

Image no. 2 showing: short sleeve blue shirt jeans:

1st subvector: 0.7, 0.3, 0.7;
2nd subvector: 0.4, 0.5, 0.4;
3rd subvector: 0.6, 0.7, 0.1.

Image no. 11 showing: blue trousers jeans:

1st subvector: 0.7, 0.8, 0.7;
2nd subvector: 0.8, 0.8, 0.9;
3rd subvector: 0.1, 0.1, 0.9.

Now in order to define a search criteria, the features that should be searched have to be defined. In the present embodiment this can be done by defining the values of one or more vector entries and search for images having the same or similar values for the same entries in their vector representation. In order to compare only elements which are relevant for the search, weights can be applied to the vector representations before comparison (i.e. before determining the value of a distance measure). Thereby differences in features not relevant to the present search can be suppressed e.g. by multiplication with a zero or small weight. In one example a search user interface can be implemented with a slider control next to a search input field or a search results pane. Moving the slider from one side to another will change the weights used to conduct image comparison. In this instance, the weights can be adjusted manually. In an alternative or additional user interface example, an interface for manual input or selection of images and defining them as being members of the same group can be provided. In this way the system may automatically optimize weights to emphasize those subvector elements which separate different groups and find similarities in the same groups in the best (mathematically optimal) way. This optimization will be explained in more detail with regard to three exemplary scenarios in the following.

As mentioned previously, an optimization calculation may be used to determine suitable weights, i.e. weights that are relatively higher on the features which are similar among images selected by the user, assuming that the user matched items on those features and marked them as elements of the same group. The following scenarios will discuss the weights resulting from different exemplary image selections.

Scenario 1

In scenario 1, the user selected images no. 1 and 6 (as defined in the list of images above) as being members of the group 1; images no. 3 and 9 as members of group 2; images no. 2 and 11 as members of group 3.

The weight optimization will result with amplified weights on the 1st layer and thus the 1st subvector 308 and would yield grouping based on colours and textures/material:

Group 1: red cotton items;
Group 2: blue cotton items;
Group 3: blue jeans items.

In extreme, in scenario 1, where the user grouped items predominantly based on colour the weights applied to the 1st subvector 308 in the weighting 310 will be close to 1 and for the 2nd and 3rd subvectors 312, 316 the weights applied in the weighting 314, 318 will be close to 0.

Scenario 2

In scenario 2, the user selected images no. 1, 2 and 7 as being members of the group 1; images no. 3 and 4 as members of group 2; images no. 10 and 11 as members of group 3.
The weight optimization will result in amplified weights for the 2nd layer 304-305 and thus 2nd subvector 312 and would yield grouping based on shape:

Group 1: T-shirts and short-sleeve shirts;
Group 2: long sleeve shirts;
Group 3: trousers.

In extreme, in scenario 2, where the user grouped items predominantly based on shape the weights applied to the 2nd subvector 312 in the weighting 314 will be close to 1 and for the 1st and 3rd subvectors 308, 316 the weights applied in the weighting 310, 318 will be close to 0.

Scenario 3

In scenario 3, the user selected images no. 1 and 5 as being members of the group 1, images no. 3 and 6 as members of group 2, images no. 7 and 9 as members of group 3, images no. 10 and 11 as members of group 4.
The optimization will result with amplified weights on 3rd layer 306 and thus 3rd subvector 316 and would yield grouping based on predefined classes:

Group 1: short sleeve shirts,
Group 2: long sleeve shirts,
Group 3: T-shirts,
Group 4: trousers.

In extreme, in scenario 3, where users grouped items predominantly based on category (or product class) the weights applied to the 3rd subvector 316 in the weighting 318 will be close to 1 and for the 1st and 2nd subvectors 308, 312 the weights applied in the weighting 310, 314 will be close to 0. Particular embodiments of the invention have been described. While certain features of the invention have been illustrated and described herein, many modifications, substitutions, changes, and equivalents may occur to those skilled in the art. For example, the actions cited in the claims can be done in a different order and still achieve desirable results. For example, the processes depicted in the accompanying figures do not necessarily require the particular sequence to achieve desirable results. Other embodiments are within the scope of the following claims. It is therefore to be understood that the appended claims are intended to cover all such modifications and changes and still keep within the spirit of the invention.

**Claims**

1. Method for determining the similarity of at least two searched images relative to at least one search image, the method comprising:

   - propagating the at least one search image through a neural network trained for image classification and having at least two consecutive layers;
   - extracting activations of the neural network resulting from the propagation;
   - determining a vector representation of the at least one search image based on the extracted activations;
   - determining a value of a distance measure between the vector representation of the at least one search image and each of at least two pre-determined vector representations corresponding to the at least two searched images; and

- determining a relative similarity of the searched images according to the respective determined value of the distance measure,

**characterized in that** when extracting activations of the neural network resulting from the propagation, activations of at least two layers at different depths of the neural network are extracted.

2. Method according to claim 1, **characterized in that** a subvector representation is determined based on the extracted activations of each of the at least two layers and the vector representation of the at least one search image is determined by concatenating the sub-vector representations.

3. Method according to claim 2, **characterized in that** at least one of the sub-vector representations is determined by performing a dimensionality reduction of the extracted activations of the respective layer.

4. Method according to claim 3, **characterized in that** the dimensionality reduction includes one or more operations from a group comprising: max pooling, average pooling and singular value decomposition.

5. Method according to claim 3 or 4, **characterized in that** the dimensionality reduction includes the application of an autoencoder neural network.

6. Method according to one of claims 1 to 5, **characterized in that** the relative influence of the activations of each of the at least two layers on the vector representation of the at least one search image is modified according to weights associated with the at least two layers.

7. Method according to claim 6, **characterized in that** the weights are determined from at least one group of search images, wherein each group comprises at least two search images, according to distances between the vector representations of the search images belonging to same group.

8. Method according to claim 7, **characterized in that** the weights are determined as to decrease the summation of distance measures between vector representations of the search images belonging to same group.

9. Method according to one of claims 6 to 8, **characterized in that** the weights are determined from two or more groups of search images, wherein each group comprises at least one search image, according to distance between the vector representations of search images belonging to different groups.

10. Method according to claim 9, **characterized in that** the weights are determined as to increase the summation of distance measures between vector representations of the search images belonging to different groups.

11. Method according to claim 8 and claim 10, **characterized in that** the weights are determined by maximizing an overall score function, which is a ratio wherein the numerator of the ratio is the summation of distance measures between vector representations of the search images belonging to different groups and denominator of the ratio is summation of distance measures between vector representations of the search images belonging to same group.

12. Method according to one of claims 1 to 11, **characterized in that** cosine distance is used as the distance measure.

13. Method for providing a selection of searched products similar to at least one search product, comprising the method according to one of claims 1 to 12, wherein the search image(s) is/are image(s) of the at least one search product and the searched images are images of the searched products.

14. Computer program product for determining the similarity of at least two searched images relative to at least one search image, the computer program product comprising program parts, which when loaded onto a computer are designed to perform the method steps of a method according to one of claims 1 to 13.

15. Search engine for searching images, the search engine comprising:

   - a neural network, trained for image classification and having at least two consecutive layers;
   - a collection of at least two pre-determined vector representations corresponding to at least two searchable images;
   - selection means for selecting one or more of the at least two searchable images based on at least one search image provided to the search engine and based on the similarity of the at least two searchable images relative to the search image, wherein the selection means comprises means for propagating the at least one search image through the neural network, means for extracting activations of the neural network resulting from the propagation, means for determining a vector representation of the at least one search image based on the extracted activations, means for determining a value of a distance measure between the vector representation of the at least one search image and each of the at least two pre-determined vector representations from the collection, and means for determining a relative similarity of the searchable images according to the respective determined value of the distance measure, **characterized in that** the means for extracting activations of the neural network are configured to extract activations of at least two layers at different depths of the neural network.

| Train CNN | 101 |

| Conduct Layer Pooling | 102 |

| Concatenate Subvectors | 103 |

| Database for Search Prepared | 104 |

Fig. 1

| User selects photos | 201 |

| Define clusters and thresholds | 202 |

| Optimize subvectors' weights | 203 |

| Images assigned to each cluster | 204 |

Fig. 2

Fig. 3

- 301 Input
- 302 1st Convolutional Layer
- 303 1st Pooling Layer
- 304 2nd Convolutional Layer
- 305 2nd Pooling Layer
- 306 Fully Connected Layer
- 307 1st Global Pooling
- 308 1st subvector
- 309 Normalisation
- 310 Weighting
- 311 2nd Global Pooling
- 312 2nd subvector
- 313 Normalisation
- 314 Weighting
- 315 Dimensionality reduction
- 316 3rd subvector
- 317 Normalisation
- 318 Weighting
- 319 Concatenation
- 320 Final vector representation

Europäisches
Patentamt

European
Patent Office

Office européen
des brevets

**EUROPEAN SEARCH REPORT**

Application Number

EP 16 19 0198

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIANG ZHENG ET AL: "Good Practice in CNN Feature Transfer", ARXIV.ORG, CORNELL UNIVERSITY LIBRARY, 201 OLIN LIBRARY CORNELL UNIVERSITY ITHACA, NY 14853, 1 April 2016 (2016-04-01), XP080692695, * abstract; figures 1, 2 * * sections 3.1, 3.2 and 4.3 * | 1-15 | INV. G06K9/46 G06K9/62 |
| X | NG JOE YUE-HEI ET AL: "Exploiting local features from deep networks for image retrieval", 2015 IEEE CONFERENCE ON COMPUTER VISION AND PATTERN RECOGNITION WORKSHOPS (CVPRW), IEEE, 7 June 2015 (2015-06-07), pages 53-61, XP032795533, DOI: 10.1109/CVPRW.2015.7301272 [retrieved on 2015-10-19] * abstract * * sections 3.1 to 3.4 * | 1,3,4, 13-15 | |
| A | BELL SEAN ET AL: "Inside-Outside Net: Detecting Objects in Context with Skip Pooling and Recurrent Neural Networks", 2016 IEEE CONFERENCE ON COMPUTER VISION AND PATTERN RECOGNITION (CVPR), IEEE, 27 June 2016 (2016-06-27), pages 2874-2883, XP033021468, DOI: 10.1109/CVPR.2016.314 [retrieved on 2016-12-09] * figure 1 * | 1-15 | TECHNICAL FIELDS SEARCHED (IPC) G06K |

-/--

The present search report has been drawn up for all claims

| Place of search | Date of completion of the search | Examiner |
|---|---|---|
| The Hague | 13 February 2017 | Nowbakht Irani, Ali |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

**EUROPEAN SEARCH REPORT**

Application Number

EP 16 19 0198

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Alex Krizhevsky ET AL: "ImageNet classification with deep convolutional neural networks", The 26th annual conference on Neural Information Processing Systems (NIPS'25): 3-8 December 2012, 6 December 2012 (2012-12-06), XP055113686, Retrieved from the Internet: URL:http://books.nips.cc/papers/files/nips25/NIPS2012_0534.pdf [retrieved on 2014-04-11] * abstract * | 1-15 | |

TECHNICAL FIELDS SEARCHED (IPC)

The present search report has been drawn up for all claims

| Place of search | Date of completion of the search | Examiner |
|---|---|---|
| The Hague | 13 February 2017 | Nowbakht Irani, Ali |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 104572965 A

- US 20150278642 A1


**Non-patent literature cited in the description**

- **HUEI-FANG YANG et al.** *Supervised Learning of Semantics-Preserving Hashing via Deep Neural Networks for Large-Scale Image Search, http://arxiv.org/abs/1507.00101*

- **NEAL KHOSLA et al.** *Building ImageBased Shoe Search Using Convolutional Neural Networks, http://cs231n.stanford.edu/reports/nealk final report.pdf*
- **JIANG WANG et al.** *Learning Fine-grained Image Similarity with Deep Ranking, https://arxiv.org/pdf/1404.4661v1.pdf*